# EUROPEAN PATENT SPECIFICATION

(11) **EP 1 794 485 B1**
(45) Date of publication and mention of the grant of the patent: **27.08.2008**
(21) Application number: 04822302.8
(22) Date of filing: 27.09.2004
(51) Int. Cl.: F16L 9/12, B29C 53/58, F16L 9/18

(54) **RIGID COMPOSITE TUBULAR ARTICLE AND METHOD FOR ITS PRODUCTION**
STARRER RÖHRENFÖRMIGER VERBUNDARTIKEL UND HERSTELLUNGSVERFAHREN DAFÜR
ARTICLE TUBULAIRE COMPOSITE RIGIDE ET PROCEDE DE PRODUCTION

(43) Date of publication of application: 13.06.2007
(73) Proprietor: Gestioni Mobiliari ed Immobiliari S.p.A., 20121 Milano (IT)
(72) Inventor: CODIGNOLA, Franco, I-20139 Milano (IT)
(74) Representative: Dragotti, Gianfranco
(86) International application number: PCT/EP2004/010810
(87) International publication number: WO 2006/034721

(56) References cited:
- EP-A- 1 231 423
- DE-A1- 2 504 883
- FR-A- 1 308 575
- US-A- 4 620 569

## Description

The present invention relates to a reinforced rigid tubular manufactured article and the method for its manufacture.

More particularly, the present invention relates to a rigid and reinforced tubular manufactured article of plastics material used for conveying and transporting fluids and liquids, so that it can find advantageous application in aqueducts and oil pipelines, gas pipelines, drainage networks and the like.

Hitherto, tubular manufactured articles of reinforced and non-reinforced concrete, of metal materials, such as steel, or of single-wall plastics material have been and are used for such applications.

These manufactured articles in effect have to be laid underground at a given depth so that they are subjected to both distributed and localised buckling loads (these localised loads are sometimes temporary, as in the case of manufactured articles laid underground below roadways. They further have to be produced in a leak-tight manner in order to prevent losses or leakages of the liquid or fluid which passes inside them, under the action of a pressure which can also reach substantial values. Finally, they have to be chemically inert with respect to the fluids which pass inside them. It will immediately be appreciated that any loss or fracture of the underground tubular manufactured articles would lead to complex interventions because it would be necessary to carry out excavations in order to locate and reach the portion of the manufactured article or the junction at which the loss may have occurred, and to carry out the repair in situ.

Given the relative cost of the steel tubes which need to be adequately protected and the tubes of plastics material with a single wall, the manufactured articles currently in use are preferably concrete articles, which, however, have the main disadvantage of being very heavy, so that they can be used only in sections of modest length, therefore requiring a large number of leak-tight junctions. It is obvious that each junction is a potential source of losses.

A number of solutions have been proposed in the past in order to produce these types of tubular manufactured article of plastics material since it is thus possible, on the one hand, to use chemically and electrically inert materials (in fact, it should be noted that electrical inertia constitutes a defence against through-corrosion) and, on the other hand, to produce manufactured articles having a specific weight which is far less than the conventional materials previously mentioned.

A solution which has been examined and studied to a greater degree is one which comprises two coaxial cylindrical elements, between which a reinforcing element is interposed which is fixedly joined to the mutually facing surfaces of both of the cylindrical elements. This reinforcing element can be composed of a ribbing of the material that constitutes the coaxial cylindrical elements, which material is preferably a glass fibre reinforced unsaturated polyester resin. This solution is described in Italian patents numbers 1,006,957, 1,037,746 and 1,058,524, which also make provision for the reinforcing ribbing to be helically wound and embedded in a layer of expanded resin which is interposed between the two coaxial cylindrical elements.

In other cases (French patent No. 1,308,575), the reinforcing element is itself constituted by a tubular element which is helically wound in the gap between the two cylindrical elements, the helices of the tubular reinforcing element being permanently fixed in the mutual contact zones to the adjacent surfaces of the coaxial cylindrical elements. Similar solutions have also been proposed in published German patent application Nos. 2504883 and 2458288.

More recently, there has been proposed in international patent application No. WO 02/065011 a composite tubular manufactured article which also comprises at least two coaxial rigid elements of plastics material, forming a gap in which a reinforcing element is arranged which is itself constituted by a helically wound tubular element which is characterised in that it is corrugated or shaped in an indented manner and whose turns, during manufacture, are caused to penetrate the adjacent surfaces of the two coaxial cylindrical elements, if only to a minimum thickness.

This solution produces tubular manufactured articles in which the rigidity in a transverse direction is more than double that of a single-layer tube having a wall of a thickness equal to the total thickness of the reinforced manufactured article.

Naturally, a further increase in the buckling resistance in addition to the other mechanical properties of the reinforced tubular manufactured article still remains a highly desirable objective from the industrial viewpoint and the point of view of applications.

This is precisely the object of the present invention, that is to say, to produce a rigid and reinforced tubular manufactured article of plastics material, in which the mechanical properties, and in particular the buckling resistance in a direction transverse to the axis of the manufactured article, are greatly improved over the prior art.

This object and other objects are achieved by the tubular manufactured article according to the appended claims The present invention further relates to the method for producing the above-defined tubular manufactured article.

This method includes the steps:
(a) manufacturing, by a method known per se, a tubular cylindrical member, which is referred to as the internal cylindrical member, of rigid plastics material on a temporary support mandrel;
(b) winding a tubular spacer element of compatible plastics material on the outer surface of the internal cylindrical member in a helix which has a predetermined pitch and which is substantially perpendicular to the axis of the temporary support mandrel which is kept in rotation;
(c) producing, by a known method, before the plastics material which constitutes the internal cylindrical member has completely hardened, a layer of plastics material which is weldable to that of the internal cylindrical member, at such an angle as to allow the layer to be positioned both against the external surface of the internal cylindrical member and over the turns of the tubular spacer element in such a manner as to take on a wave-like form;
(d) optional winding of a second tubular spacer element having the same pitch as the first winding, but staggered axially by a half-pitch, in such a manner as to be interposed between the turns of the winding of the preceding step (b), and being positioned in the indentations of the wave which is already formed by the layer produced in the preceding step (c);
(e) manufacturing, by a known method, a cylindrical member, which is referred to as the external cylindrical member, which is coaxial with respect to the internal cylindrical member and which is spaced by the thickness corresponding to the sum of the diameter of the tubular spacer element and the thickness of the intermediate layer of plastics material, before the resin constituting the layer has completely hardened;
(f) optional repetition of steps (b) to (e) in order to produce tubular manufactured articles having a plurality of coaxial cylindrical members;
(g) withdrawing the temporary support mandrel.

In the preferred embodiment of this method, the internal and external cylindrical members and/or the layer of plastics material which is interposed between the tubular element and which is helically wound and accommodated in the gap is/are produced by a known technique which is referred to as "filament winding" consisting in winding continuous filaments of glass which are impregnated with a resin on a mandrel. A rotation movement is imparted to the mandrel and the head for depositing the glass filament impregnated with resin carries out an alternating translational movement which is directed axially relative to the mandrel.

With this technique, it is in fact known that manufactured articles are produced having strength characteristics which are substantially improved over those obtained previously with spray or casting techniques.

As regards the rigid plastics material from which the manufactured article of the present invention itself is produced, as already mentioned, this is preferably a polyester resin which is reinforced with glass fibres or an epoxy resin which is also reinforced with glass fibres or other thermosetting materials.

In place of the glass fibres, however, it is possible to use other reinforcing materials of fibre form, such as carbon fibres, or other inorganic or organic fibres, such as aramide fibres (for example, Kevlar).

In the case of the glass fibres, these are contained in the usual quantities for producing the so-called manufactured articles in plastics material reinforced by glass fibres, which quantity in the case of the invention is between 30 and 80% by weight of the total, and preferably in the order of 70% by weight, always with reference to the total weight of the manufactured article.

As regards the thickness of the gap formed between the internal and external cylindrical members, this is preferably between 5 and 40 mm, and the thickness of the layer forming the wave is preferably from 1 to 5 mm, even more preferably 2 mm.

The rigid tubular manufactured articles of plastics material according to the present invention can also have very large diameters in the order of 3 metres, and even greater, so that they comply with the requirements set out in the introduction to this description.

The features and advantages of the present invention will be appreciated from the description below given with reference to the appended drawings, in which:
Figure 1 is a schematic, partial section in an axial plane of a first embodiment of the tubular manufactured article according to the present invention;
Figure 2 is a view similar to Figure 1 of a second embodiment of the present invention, and
Figure 3 is a partial section of a third embodiment of the invention.

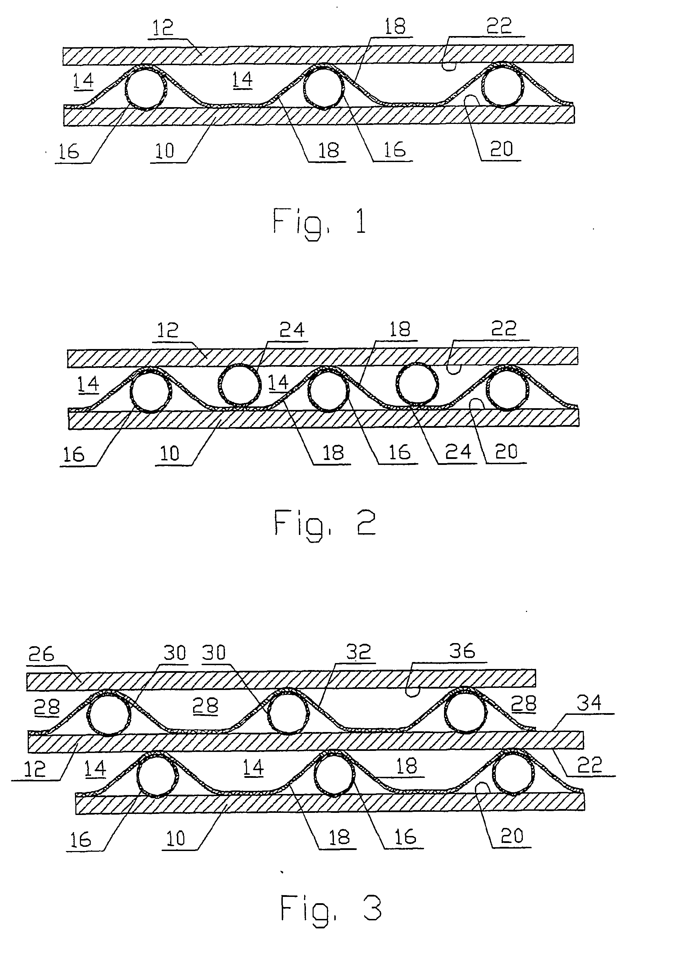

With reference first to Figure 1, a first embodiment of the tubular manufactured article of the present invention is shown and comprises an internal cylindrical tubular member 10 and an external cylindrical tubular member 12, between which a gap 14 is defined.

A spacer constituted by a tubular element 16 which is helically wound around the internal cylindrical member 10 is located in this gap.

A layer of plastics material 18 is further arranged in the gap 14, which layer 18 is produced on the outer side of the turns of the tubular element 16 in such a manner as to bring about a wave-like course, in the indentations of which the turns of the tubular element 16 are located.

As shown in the Figures mentioned, the layer 18 is substantially in contact with the external wall 20 of the internal cylindrical member 10, to which wall, as will be seen, it remains fixed as a result of the formation of permanent chemical bonds.

The crests of the waves of the layer 18 are also located in contact with the internal wall 22 of the external cylindrical member 12, being anchored thereto as a result of the formation of permanent chemical bonds.

In the embodiment shown in Figure 2, the tubular manufactured article has the same structure as that in Figure 1, except that in the gap 14 there is provided a second helical winding of a tubular element 24 which is wound with a staggering of a half-pitch with respect to that of the tubular element 16 so that it is arranged symmetrically relative to the opposite side of the layer 18 with respect to the winding 16.

Finally with reference to Figure 3, an embodiment of the tubular manufactured article is shown according to the present invention, in which the structure of Figure 1 is repeated in order to further increase the transverse rigidity when specific performance is desired.

In this case, the cylindrical member 12 acts as an intermediate cylindrical member which serves as the external cylindrical member for the gap 14 but as the internal cylindrical member with respect to another external cylindrical member 26, with which it forms a gap 28, in which a second tubular spacer element 30 preferably having features identical to those of the tubular element 16 is accommodated with helical winding.

Another reinforcing layer 32 having features and a course similar or preferably identical to those of the reinforcing layer 18 is produced over the winding formed by the tubular element 30, so that in this case permanent chemical bonds are also formed between this layer 32 and the surfaces at which it is in contact with the external wall 34 of the cylindrical member 12 and with the internal wall 36 of the external cylindrical member 26.

These chemical bonds are produced by virtue of two concomitant features of the present invention:
(a) firstly, the selection of the resins which constitute the various components of the composite tubular manufactured article of the present invention, which resins have to be mutually compatible and in particular weldable upon contact, provided that this is effected before the hardening of each resin is complete. The types of resin already set out above comply with this requirement;
(b) secondly, carrying out the various method steps for manufacturing the tubular manufactured article using methods and times so as to comply with the requirement indicated above, that is to say that
   (i) the helical winding of the tubular element 16 on the internal cylindrical member 10 is effected before the resin constituting the member has completely hardened, preferably when the resin (or the resin reinforced with glass fibre) which constitutes it is still sufficiently pasty to allow the turns of the tubular element 16 to penetrate to a depth, however small, in the surface of the internal cylindrical member 10;
   (ii) similarly, the external cylindrical member 12, also preferably having the same composition as the internal cylindrical member 10, is formed in such a manner that it engages with a given pressure with the ridge portions of the layer 18 so as to bring about not only the chemical bonds between the internal wall 22 of the member 12 and the regions in which it is in contact with the layer 18, but also to carry out (after final hardening) a physical action of mutual clamping of the various components of the tubular manufactured article.

With regard to the tubular element 16 (as is also the case for the elements designated 24 and 30), they can be of a simple type, as illustrated in the Figures, or can be constituted by corrugated tubes (of the type indicated, for example, in international patent application WO 02/065011), in which case the mechanical strength of the final tubular manufactured article is further increased, and in particular the transverse rigidity is increased.

Tests were carried out with the tubular manufactured articles produced according to the present invention in comparison with single-layer tubes having a thickness corresponding to the overall wall thickness of the tubular manufactured article according to the present invention (and therefore having equal resistance to internal pressure).

For the tubular manufactured article according to the present invention, it should be stated that the external and internal cylindrical members were produced by means of "filament winding" with polyester resin reinforced with 70% glass fibre by weight. The tubular element 16 itself was constituted by a corrugated tube of PVC and the layer 18 itself was produced of polyester resin reinforced with glass fibre.

The table below (in which ECOD indicates a tubular manufactured article according to the invention) shows the results for various internal diameters (DN) of the tubular manufacture article:

| | | **S**_{structural} | **S**_{connection} | Dia_{spacer} | **Transverse rigidity** | |
|---|---|---|---|---|---|---|
| | | [mm] | [mm] | [mm] | **[N/m²]** **y** = **1%** | **y** = **3%** |
| DN 1000 | Single-layer | 9.40 | --- | --- | 1.640 | 1.640 |
| | ECOD | 4.10 + 3.10 | 2.80 | 20.00 | 19.440 | 17.302 |
| DN 1200 | Single-layer | 11.00 | --- | --- | 1.486 | 1.486 |
| | ECOD | 4.10 + 4.10 | 2.80 | 20.00 | 12.201 | 10.620 |
| DN 1600 | Single-layer | 14.9 | --- | --- | 1.533 | 1.533 |
| | ECOD | 5.80 + 5.80 | 2.80 | 20.00 | 9.599 | 8.974 |
| DN 2000 | Single-layer | 18.80 | --- | --- | 1.562 | 1.562 |
| | ECOD | 7.50 + 7.50 | 2.80 | 25.00 | 10.977 | 9.174 |
| | Filled with sand | 31.30 | --- | --- | 5.000 | 5.000 |

Where S_{structural} = thickness of the cylindrical (i) member (i), S_{connection} = thickness of the layer. (18) in the ECOD tubes.
y= deformation imparted along the diameter of the ring in the test expressed as a percentage over the nominal diameter.

For the single-layer tubes and the ECOD tubes, the nominal pressure PN is equal to 10 bar, while for the tube which is filled with sand PN = 6 bar.

All the ECOD tubes are produced by means of "filament winding" with polyester resin.

In the ECOD tubes, the spacer is constituted by a corrugated tube of PVC.

The rigidities of the single-layer tubes are obtained from the tables of the manufacturers.

The rigidities of the ECOD tubes are obtained from tests carried out at the OMECO srl laboratory in accordance with standards UNI EN 1226 and UNI EN 1228; the value indicated is the mean of those measured for the two samples of each diameter.

It will readily be appreciated from the above data that the transverse rigidity is greatly increased in the tubular manufactured article produced according to the present invention.

These data make the tubular manufactured article according to the present invention highly advantageous both over tubes of concrete (that is to say, those currently used) and over single-layer tubes of plastics material having an equivalent wall thickness.

## Claims

1. Composite rigid tubular manufactured article of the type comprising at least two coaxial cylindrical members of plastics material (10, 12), a reinforcing spacer element which is accommodated in the gap (14, 28) between the two cylindrical members and which is helically wound around the internal cylindrical member (10) of the pair of cylindrical members, **characterised in that** a layer (18, 32) of a weldable material is interposed between each turn of the spacer element and the directly facing surface of one and of the other of the coaxial cylindrical members, alternately, in order to form a chemical bond with the surfaces of the coaxial cylindrical members, the layer (18, 32) being arranged in the gap (14, 28) with a wave-like course, in the concave portion of which the spacer element is accommodated.

2. Composite rigid tubular manufactured article according to claim 1, **characterised in that** the spacer element is a tubular element (16, 24, 30) of plastics material, preferably a corrugated or knurled tubular element.

3. Composite rigid tubular manufactured article according to claim 1, **characterised in that** the layer (18, 32) of weldable material is of the plastics material that forms the coaxial cylindrical members.

4. Composite rigid tubular manufactured article according to claim 1, **characterised in that** the cylindrical members are produced from glass fibre reinforced unsaturated polyester resin or an epoxy resin which is also reinforced with glass fibres, or other thermosetting materials reinforced with glass fibres.

5. Composite rigid tubular manufactured article according to claim 1, **characterised in that** the cylindrical members (10, 12, 26) are produced by means of "filament winding".

6. Composite rigid tubular manufactured article according to claim 3, **characterised in that** the layer (18, 32) of weldable material is produced from glass fibre reinforced unsaturated polyester resin or an epoxy resin which is also reinforced with glass fibres or other thermosetting material.

7. Composite rigid tubular manufactured article according to claims 3 and/or 6, **characterised in that** the unsaturated polyester resin or the epoxy resin or other thermosetting material is reinforced with fibres other than glass fibres, which are selected from carbon fibres or other inorganic or organic fibres, such as aramide fibres, preferably Kevlar.

8. Composite rigid tubular manufactured article according to claim 1, **characterised in that** the thickness of the gap (14, 28) is between 5 and 40 mm.

9. Composite rigid tubular manufactured article according to claim 1, **characterised in that** the thickness of the layer (18, 32) is from 1 to 5 mm, preferably 2 mm.

10. Composite rigid tubular manufactured article according to claim 1, **characterised in that** it comprises a second helically wound spacer member (24), which is wound with a staggering of a half-pitch with respect to the helically wound spacer member (16) so that the turns thereof remain fixed between the indentations of the layer (18) and the adjacent internal wall (22) of the external cylindrical member (12).

11. Composite rigid tubular manufactured article according to claim 10, **characterised in that** the turns of the tubular spacer elements (16, 24) are caused to penetrate to a small depth the adjacent wall of the internal cylindrical member and the external cylindrical member, respectively.

12. Composite rigid tubular manufactured article according to claim 1, **characterised in that** it comprises another cylindrical member (26) which is coaxial with the cylindrical members (10, 12), and a tubular spacer element (30) which is similar to the tubular spacer element (16) and which is helically wound around the cylindrical member (12) and accommodated in the gap (28) which is formed between the cylindrical members (12, 26), there being accommodated in the gap (28) a layer (32) having features and a wave-like course which are similar to those of the layer (18) accommodated in the gap (14).

13. Method for producing the tubular manufactured article according to any one of claims 1 to 12, **characterised by** the following steps:
(a) manufacturing, by a method known *per se*, a tubular cylindrical member, which is referred to as the internal cylindrical member, of rigid plastics material on a temporary support mandrel;
(b) winding a tubular spacer element of compatible plastics material on the outer surface of the internal cylindrical member in a helix which has a predetermined pitch and which is substantially perpendicular to the axis of the temporary support mandrel which is kept in rotation;
(c) producing, by a known method, before the plastics material which constitutes the internal cylindrical member has completely hardened, a layer of plastics material which is weldable to that of the internal cylindrical member, at such an angle as to allow the layer to be positioned both against the external surface of the internal cylindrical member and over the turns of the tubular spacer element in such a manner as to take on a wave-like form;
(d) optional winding of a second tubular spacer element having the same pitch as the first winding, but axially staggered by a half-pitch, in such a manner as to be interposed between the turns of the winding of the preceding step (b), and being positioned in the indentations of the wave which is already formed by the layer produced in the preceding step (c);
(e) manufacturing, by a known method, a cylindrical member, which is referred to as the external cylindrical member, which is coaxial with respect to the internal cylindrical member and which is spaced by the thickness corresponding to the sum of the diameter of the tubular spacer element and the thickness of the intermediate layer of plastics material, before the resin constituting the layer has completely hardened;
(f) optional repetition of steps (b) to (e) in order to produce tubular manufactured articles having a plurality of coaxial cylindrical members;
(g) withdrawing the temporary support mandrel.

## Patentansprüche

1. Starrer röhrenförmiger Verbundartikel der Art, umfassend wenigstens zwei koaxiale Zylinderkörper aus Kunststoff (10, 12), ein aussteifendes Abstandselement, welches in dem Zwischenraum (14, 28) zwischen den beiden Zylinderkörpern angeordnet und spiralförmig um den inneren Zylinderkörper (10) des Zylinderkörperpaares gewunden ist, **dadurch gekennzeichnet, dass** eine Bahn (18, 32) aus einem schweißbaren Material abwechselnd zwischen jeder Windung des Abstandselements und der direkt zugewandten Oberfläche des eines Zylinderkörpers und an dem anderen koaxialen Zylinderkörper angeordnet ist, wobei die Bahn (18, 32) zur Herstellung einer chemischen Verbindung mit den Oberflächen der koaxialen Zylinderkörper in dem Zwischenraum (14, 28) mit einem wellenförmigen Verlauf angeordnet ist, in dessen konkaven Abschnitten das Abstandselement untergebracht ist.

2. Starrer röhrenförmiger Verbundartikel nach Anspruch 1, **dadurch gekennzeichnet, dass** das Abstandselement ein rohrförmiger Körper (16, 24 30) aus Kunststoff, vorzugsweise ein geriffelter oder gerändelter rohrförmiger Körper ist.

3. Starrer röhrenförmiger Verbundartikel nach Anspruch 1, **dadurch gekennzeichnet, dass** die Bahn (18, 32) aus schweißbarem Material aus einem Kunststoff ist, aus dem die koaxialen Zylinderkörper gebildet sind.

4. Starrer röhrenförmiger Verbundartikel nach Anspruch 1, **dadurch gekennzeichnet, dass** die Zylinderkörper aus einem glasfaserverstärkten ungesättigten Polyesterharz oder aus einem Epoxydharz, das ebenfalls glasfaserverstärkt ist, oder einem anderen warmhärtenden glasfaserverstärkten Material hergestellt sind.

5. Starrer röhrenförmiger Verbundartikel nach Anspruch 1, **dadurch gekennzeichnet, dass** die Zylinderkörper (10, 12, 26) mittels "filament winding" hergestellt werden.

6. Starrer röhrenförmiger Verbundartikel nach Anspruch 3, **dadurch gekennzeichnet, dass** die Bahn (18, 32) aus schweißbarem Material aus einem glasfaserverstärkten ungesättigten Polyesterharz oder einem Epoxydharz, das ebenfalls glasfaserverstärkt ist, oder einem anderen warmhärtenden Material hergestellt ist.

7. Starrer röhrenförmiger Verbundartikel nach einem der Ansprüche 3 und/oder 6, **dadurch gekennzeichnet, dass** das ungesättigte Polyesterharz oder das Epoxydharz oder das andere warmhärtende Material mit anderen Fasern als Glasfasern verstärkt ist, wobei Kohlefasern oder andere anorganische oder organische Fasern, wie beispielsweise Aramidfasern, vorzugsweise Kevlar, zur Auswahl stehen.

8. Starrer röhrenförmiger Verbundartikel nach Anspruch 1, **dadurch gekenntzeichnet, dass** die Tiefe des Zwischenraumes (14, 28) zwischen 5 mm und 40 mm beträgt.

9. Starrer röhrenförmiger Verbundartikel nach Anspruch 1, **dadurch gekennzeichnet, dass** die Stärke der Bahn (18, 32) 1 mm bis 5 mm, vorzugsweise 2 mm beträgt.

10. Starrer röhrenförmiger Verbundartikel nach Anspruch 1, **dadurch gekennzeichnet, dass** der Verbundartikel ein zweites spiralförmig gewundenes Abstandselement (24) umfasst, das um eine halbe Steigung versetzt in Bezug auf das spiralförmig gewundene Abstandselement (16) gewunden ist, so dass dessen Windungen lagefest zwischen den Vertiefungen der Bahn (18) und der anliegenden Innenwandung (22) des äußeren Zylinderkörpers (12) verbleiben.

11. Starrer röhrenförmiger Verbundartikel nach Anspruch 10, **dadurch gekennzeichnet, dass** die Windungen der rohrförmigen Abstandselemente (16, 24) dazu bestimmt sind, bis zu einer geringen Tiefe in die jeweils anliegende Wandung des inneren Zylinderkörpers und des äußeren Zylinderkörpers einzudringen.

12. Starrer röhrenförmige Verbundartikel nach Anspruch 1, **dadurch gekennzeichnet, dass** der Verbundartikel eine weiteren Zylinderkörper (26), der koaxial zu den Zylinderkörpern (10, 12) angeordnet ist, und ein rohrförmiges Abstandselement (30) umfasst, das vergleichbar mit dem rohrförmigen Abstandselement (16) ist und das spiralförmig um den Zylinderkörper (12) gewunden sowie in einem Zwischenraum (28) angeordnet ist, der zwischen den Zylinderkörpern (12, 26) ausgebildet ist, wobei in dem Zwischenraum (28) eine Bahn (32) mit Eigenschaften und einem wellenförmigen Verlauf, vergleichbar mit denen der im Zwischenraum (14) angeordneten Bahn (18), untergebracht ist.

13. Verfahren zur Herstellung eines röhrenförmigen Verbundartikels nach einem der Ansprüche 1 bis 12, **gekennzeichnet durch** die folgenden Schritte:
(a) Herstellen eines röhrenförmigen Zylinderkörpers, der als innerer Zylinderkörper bezeichnet wird, aus einem starren Kunststoff auf einem temporären Trägerdorn nach einem allgemein bekannten Verfahren;
(b) Winden eines rohrförmigen Abstandselements aus einem kompatiblen Kunststoff um die Außenumfangsfläche des inneren Zylinderkörpers in einer Schraubenlinie, die eine vorgegebene Steigung besitzt und die im Wesentlichen senkrecht zur Achse des temporären Trägerdorns ausgerichtet ist, der in Rotation gehalten wird;
(c) Herstellen einer Bahn aus einem Kunststoff, der mit dem des inneren Zylinderkörpers verschweißbar ist, in einem Winkel, der sowohl die Anbringung der Bahn an der Außenumfangsfläche des inneren Zylinderkörpers, als auch das Hinwegführen über die Windungen des rohrförmigen Abstandselements in der Weise erlaubt, dass die Bahn eine Wellenform annimmt, nach einem bekannten Verfahren bevor der Kunststoff, aus dem der innere Zylinderkörper besteht, vollständig gehärtet ist;
(d) optional, Winden eines zweiten rohrförmigen Abstandselements, das die gleiche Steigung besitzt wie die erste Wicklung, aber um eine halbe Steigung axial versetzt angeordnet ist, in der Weise, dass die Windungen zwischen den Windungen der Wicklung aus Schritt (b) zu liegen kommen und dass sie in den Vertiefungen der Welle angeordnet sind, die bereits aus der Bahn gebildet wird, die in Schritt (c) hergestellt wurde;
(e) Herstellen eines Zylinderkörpers nach einem bekannten Verfahren, der als äußerer Zylinderkörper bezeichnet wird, der koaxial in Bezug auf den inneren Zylinderkörper und in einem Abstand angeordnet ist, dessen Maß der Summe aus dem Durchmesser des rohrförmigen Abstandselements und der Stärke der dazwischen liegenden Bahn aus Kunststoff entspricht, bevor das Harz, aus dem die Bahn gebildet ist, vollständig gehärtet ist;
(f) optional, Wiederholung der Schritte (b) bis (e), um einen röhrenförmigen Verbundartikel herzustellen, der mehrere koaxiale Zylinderkörper besitzt;
(g) Entfernen des temporären Trägerdorns.

## Revendications

1. Article manufacturé tubulaire rigide composite du type comprenant au moins deux éléments cylindriques coaxiaux en matière plastique (10, 12), un élément entretoise de renfort qui est logé dans l'espace (14, 28) entre les deux éléments cylindriques et qui est enroulé en spirale autour de l'élément cylindrique interne (10) de la paire d'éléments cylindriques, **caractérisé en ce qu'**une couche (18, 32) d'une matière soudable est intercalée entre chaque spire de l'élément entretoise et la surface lui faisant directement face de l'un et de l'autre des éléments cylindriques coaxiaux, en alternance, afin de former une liaison chimique avec les surfaces des éléments cylindriques coaxiaux, la couche (18, 32) étant agencée dans l'espace (14, 28) selon une forme de vague, dans la partie concave de laquelle est logé l'élément entretoise.

2. Article manufacturé tubulaire rigide composite selon la revendication 1, **caractérisé en ce que** l'élément entretoise est un élément tubulaire (16, 24, 30) en matière plastique, de préférence, un élément tubulaire ondulé ou moleté.

3. Article manufacturé tubulaire rigide composite selon la revendication 1, **caractérisé en ce que** la couche (18, 32) en matière soudable est constituée de la matière plastique qui forme les éléments cylindriques coaxiaux.

4. Article manufacturé tubulaire rigide composite selon la revendication 1, **caractérisé en ce que** les éléments cylindriques sont produits à partir de résine polyester insaturée renforcée de fibres de verre ou d'une résine époxy qui est également renforcée de fibres de verre, ou d'autres matériaux thermodurcissables renforcés de fibres de verre.

5. Article manufacturé tubulaire rigide composite selon la revendication 1, **caractérisé en ce que** les éléments cylindriques (10, 12, 26) sont produits au moyen d'un "enroulement de filament".

6. Article manufacturé tubulaire rigide composite selon la revendication 3, **caractérisé en ce que** la couche (18, 32) en matière soudable est produite à partir d'une résine de polyester insaturée renforcée de fibres de verre ou d'une résine époxy qui est également renforcée de fibres de verre ou d'un autre matériau thermodurcissable.

7. Article manufacturé tubulaire rigide composite selon la revendication 3 et/ou 6, **caractérisé en ce que** la résine de polyester insaturée ou la résine époxy ou un autre matériau thermodurcissable est renforcé avec des fibres autres que des fibres de verre, qui sont choisies parmi les fibres de carbone et autres fibres inorganiques ou organiques, telles que les fibres d'aramide, de préférence, le Kevlar.

8. Article manufacturé tubulaire rigide composite selon la revendication 1, **caractérisé en ce que** l'épaisseur de l'espace (14, 28) se situe entre 5 et 40 mm.

9. Article manufacturé tubulaire rigide composite selon la revendication 1, **caractérisé en ce que** l'épaisseur de la couche (18, 32) fait de 1 à 5 mm, de préférence, 2 mm.

10. Article manufacturé tubulaire rigide composite selon la revendication 1, **caractérisé en ce qu'**il comprend un second élément entretoise enroulé en spirale (24), qui est enroulé avec un décalage d'un demi-pas par rapport à l'élément entretoise enroulé en spirale (16) de sorte que les spires de celui-ci restent fixes entre les indentations de la couche (18) et de la paroi interne adjacente (22) de l'élément cylindrique externe (12).

11. Article manufacturé tubulaire rigide composite selon la revendication 10, **caractérisé en ce que** les spires des éléments entretoises tubulaires (16, 24) sont amenées à pénétrer sur une petite profondeur la paroi adjacente de l'élément cylindrique interne et de l'élément cylindrique externe, respectivement.

12. Article manufacturé tubulaire rigide composite selon la revendication 1, **caractérisé en ce qu'**il comprend un autre élément cylindrique (26) qui est coaxial avec les éléments cylindriques (10, 12), et un élément entretoise tubulaire (30) qui est similaire à l'élément entretoise tubulaire (16) et qui est enroulé en spirale autour de l'élément cylindrique (12) et logé dans l'espace (28) qui est formé entre les éléments cylindriques (12, 26), l'espace (28) logeant une couche (32) ayant des caractéristiques et une forme de vague qui sont similaires à celles de la couche (18) logée dans l'espace (14).

13. Procédé de production de l'article manufacturé tubulaire selon l'une quelconque des revendications 1 à 12, **caractérisé par** les étapes suivantes :
(a) fabrication, par un procédé connu en soi, un élément cylindrique tubulaire, qui est désigné comme l'élément cylindrique interne, en matière plastique rigide, sur un mandrin support provisoire ;
(b) enroulement d'un élément entretoise tubulaire en matière plastique compatible sur la surface externe de l'élément cylindrique interne en une hélice qui a un pas prédéterminé et qui est sensiblement perpendiculaire à l'axe du mandrin support provisoire qui est maintenu en rotation ;
(c) production, par un procédé connu, avant que la matière plastique qui constitue l'élément cylindrique interne ait complètement durci, d'une couche de matière plastique qui est soudable sur celle de l'élément cylindrique interne, à un angle tel qu'il permet à la couche d'être positionnée à la fois contre la surface externe de l'élément cylindrique interne et sur les spires de l'élément entretoise tubulaire de telle manière à prendre une forme de vague ;
(d) enroulement éventuel d'un second élément entretoise tubulaire ayant le même pas que le premier enroulement, mais décalé axialement d'un demi-pas, de telle manière à être intercalé entre les spires de l'enroulement de l'étape précédente (b), et étant positionné dans les indentations de la vague qui est déjà formée par la couche produite dans l'étape (c) précédente ;
(e) fabrication, par un procédé connu, d'un élément cylindrique, qui est désigné comme l'élément cylindrique externe, qui est coaxial par rapport à l'élément cylindrique interne et qui est espacé de l'épaisseur correspondant à la somme du diamètre de l'élément entretoise tubulaire et de l'épaisseur de la couche intermédiaire de la matière plastique, avant que la résine constituant la couche ait complètement durci ;
(f) répétition éventuelle des étapes (b) à (e) afin de produire des articles manufacturés tubulaires ayant une pluralité d'éléments cylindriques coaxiaux ;
(g) retrait du mandrin support provisoire.
